# EUROPEAN PATENT APPLICATION

(11) **EP 2 096 638 A1**
(43) Date of publication of application: **02.09.2009**
(21) Application number: 09002633.7
(22) Date of filing: 25.02.2009
(51) Int. Cl.: G11B 23/037, G11B 23/087

(54) **Reel and recording tape cartridge**

(30) Priority: 29.02.2008 JP 2008049386
(71) Applicant: FUJIFILM Corporation, Minato-ku Tokyo (JP)
(72) Inventor: Mori, Yasuhiro, Odawara-shi Kanagawa (JP)
(74) Representative: HOFFMANN EITLE

(57) **Abstract**

A reel which can substantially equalize the rigidity at both ends in an axis line direction of a reel hub is obtained with using a small and light-weight reinforcing ring, and a recording tape cartridge which can well protect the recording tape is obtained by applying this reel. The reel includes a resin reel hub which is formed into a cylindrical shape with a bottom portion; a resin upper flange which is integrally extended from an opening end portion of the reel hub toward a radial outside; a resin lower flange member which has a lower flange, the lower flange facing the upper flange, in being welded to a bottom plate of the reel hub in a center portion; and a reinforcing ring which reinforces a part of the reel hub in the axis line direction, the part including the opening end in a cylindrical wall of the reel hub.

## Description

### BACKGROUND OF THE INVENTION

### Field of the Invention

The present invention relates to a reel around which a recording tape such as a magnetic tape is wound and a recording tape cartridge provided with the reel.

### Description of the Related Art

There is well known a technique in which rigidity of a resin made reel hub is ensured by mounting a ring-shaped reinforcing member on an opening end side of the reel hub (for example, see Japanese patent Application Laid-Open Nos. 2004-127358 and 2005-182948).

However, in a structure of the conventional technique mentioned above, a flange on the opening end side of the reel hub is formed separately from the reel hub, and a flange on a bottom portion side of the reel hub is integral with the reel hub. In other words, there is a large difference in rigidity between both ends in an axis line direction of the reel hub in the case where the reinforcing member is not provided. Therefore, it is necessary that a high-rigidity reinforcing ring be used to reduce the difference in rigidity, and unfortunately there are many restrictions in a material, dimensions, and shape of the reinforcing member (low degree of freedom of design).

### SUMMARY OF THE INVENTION

In view of the foregoing, an object of the present invention is to provide a reel which substantially equalizes the rigidity at both ends in the axis line direction of the reel hub using a small and light-weight reinforcing ring and a recording tape cartridge which applies the reel to well protect the recording tape.

In accordance with a first aspect of the present invention, a reel includes: a reel hub that is made of a resin material and is formed into a cylindrical shape having a bottom portion; a flange that is made of a resin material and is provided integrally at the reel hub so as to extend outwardly in a radial direction of the reel hub from an opening end of the reel hub; a flange member that is made of a resin material and is bonded to an end portion on the bottom portion of the reel hub, the flange member having a flange portion facing the flange; and a reinforcing ring that reinforces the reel hub in the radial direction and is attached to a part of the reel hub in an axis line direction of the reel hub, the part including the opening end.

In the reel according to the first aspect of the invention, the flange member is bonded to the end portion of the bottom portion of the reel hub, and the flange portion of the flange member faces the flange extended from the opening end of the reel hub. Usually, compared with the bottom portion side of the reel hub, the radial rigidity tends to be decreased at the opening end side of the reel hub. However, in the reel according to the first aspect, the flange member is formed separately from the reel hub in order to suppress the increase in rigidity of the reel hub at the bottom portion side, and the rigidity is increased at the opening end side of the reel hub by the reinforcing ring and the flange integrally extended from the opening end. Therefore, the difference in rigidity is decreased at both ends in the axis line direction of the reel hub. In the configuration of the first aspect, it is only necessary to attach the reinforcing ring to a part of the reel hub in the axis line direction of the reel hub. The part of the reel hub includes the opening end in the reel hub.

Thus, in the reel according to the first aspect, the rigidity can substantially be equalized at both ends in the axis line direction of the reel hub by using the small and light-weight reinforcing ring. Therefore, in the reel hub, deformation amounts are substantially equalized at both the ends in the axis line direction in the state in which the reel hub is deformed by a winding pressure of the wound subject.

In accordance with a second aspect of the present invention, a reel includes: a reel hub that is made of a resin material and is formed into a cylindrical shape having a bottom portion; a flange that is made of a resin material and is provided integrally at the reel hub so as to extend outwardly in a radial direction of the reel hub from an opening end of the reel hub; a flange member that is made of a resin material and is bonded to the bottom portion of the reel hub within a range where a metal plate attached to a center portion of the flange member overlaps the bottom portion of the reel hub in an axis line direction of the reel hub, the flange member having a flange portion facing the flange; and a reinforcing ring that reinforces the reel hub in the radial direction and is attached to a part of the reel hub in the axis line direction, the part including the opening end.

In the reel according to the second aspect, the center portion of the flange member is bonded to the bottom portion of the reel hub, and the flange portion of the flange member faces the flange extended from the opening end of the reel hub. Usually, compared with the bottom portion which is of the closed end of the reel hub, the radial rigidity tends to be decreased at the opening end of the reel hub. However, in the reel of the second aspect, the flange member is formed separately from the reel hub in order to suppress the increase in rigidity of the reel hub at the.bottom portion side, the rigidity is increased at the opening end side of the reel hub by the reinforcing ring and the flange integrally extended from the opening end. Therefore, the difference in rigidity is decreased at both the ends in the axis line direction of the reel hub. In the configuration of the second aspect, it is only necessary to attach the reinforcing ring to a part of the reel hub in the axis line direction of the reel hub. The part of the reel hub includes the opening end of the reel hub.

Thus, in the reel according to the second aspect, the difference in rigidity at both the ends in the axis line direction of the reel hub can be equalized by using the small and light-weight reinforcing ring. Therefore, in the reel hub, deformation amounts are substantially equalized at both the ends in the axis line direction in the state in which the reel hub is deformed by a winding pressure of the wound subject. In the flange member bonded to the bottom portion of the reel hub in the center portion where the metal plate is attached, the flange portion is hardly deformed due to the deformation of the reel hub.

In accordance with a third aspect of the present invention, in the reel according to the first or second aspect, the reinforcing ring is attached to the reel hub such that a clearance is radially formed between the reinforcing ring and an inner circumference of the reel hub.

In the reel according to the third aspect, because the clearance is radially set between the reel hub and the reinforcing ring, in other words, because the reinforcing member is attached to the reel hub by loose fitting, accuracy of the winding surface of the reel hub is not influenced by attaching the reinforcing ring. Additionally the reinforcing ring is easily attached.

In accordance with a fourth aspect of the present invention, in the reel as in any one of first to third aspects, a clearance of 0.05 mm or less is set between the inner circumference of the reel hub and an outer circumference of the reinforcing ring.

In the reel according to the fourth aspect, the clearance of 0.05 mm or less is set between the inner circumference of the reel hub and the outer circumference of the reinforcing ring. Therefore, the good reinforcing effect of the reel hub is exerted by the reinforcing ring in a creep environment of the resin reel hub.

In accordance with a fifth aspect of the present invention, in the reel as in any one of first to fourth aspects, the reinforcing ring is fixed to the reel hub by welding.

In the reel according to the fifth aspect, the reinforcing ring which is formed separately from the reel hub is fixed to the reel hub by the welding. Therefore, the reinforcing ring has no influence on resin molding of the reel hub and the flange.

In accordance with a sixth aspect of the present invention, in the reel according to the fifth aspect, the reinforcing ring is fixed to the reel hub by welding in a face portion orientated toward the axis line direction of the reel hub. In the sixth aspect, it is possible that the reinforcing ring includes an outer flange portion provided so as to extend outwardly in the radial direction, a step portion at which the face portion is formed is formed at the opening end of the reel hub, and a lower face of the outer flange portion is fixed to the face portion by welding.

In the reel according to the sixth aspect, the reinforcing ring is fixed to the reel hub at the face portion (including surface inclined to the surface orthogonal to the axis line direction of the reel hub) orientated toward the axis line direction of the reel hub. Therefore, the reinforcing ring can be fixed to the reel hub while the clearance is radially formed between the reinforcing ring and the reel hub.

In accordance with a seventh aspect of the present invention, the recording tape cartridge includes a case; and the reel as in any one of first to sixth aspects in which a recording tape is wound around a winding surface of the reel hub, the recording tape being accommodated in the case while being able to be drawn and wound.

In the recording tape cartridge according to the seventh aspect, the recording tape wound around the reel hub of the reel is drawn from the case to write and read (may be either one) information. Applying of the reel as in any one of first to sixth aspects equalizes the rigidity at both the ends in the axis line direction of the reel hub. In the state in which the recording tape is wound around the reel hub, the shape of the reel hub substantially becomes symmetrical in relation to the center in the axis line direction, thereby suppressing the deformation of the recording tape wound around the reel hub. That is, the recording tape is protected.

Thus, in the recording tape cartridge according to the seventh aspect, the recording tape may well be protected by applying the reel of any one of the aspects.

In accordance with an eighth aspect of the present invention, preferably the recording tape cartridge according to the seventh aspect further includes a rotation lock member that is provided in the reel hub so as to be able to be relatively displaced in the axis line direction of the reel hub with respect to the case, the rotation lock member being switched between a rotation lock position and a rotation permission position by the relative displacement, rotation of the reel with respect to the case being prohibited at the rotation lock position and rotation of the reel with respect to the case being permitted at the rotation permission position, wherein the reinforcing ring is formed such that a gap in the radial direction between the reinforcing ring and the rotation lock member when the rotation lock member is located at the rotation lock position becomes a predetermined value or less.

In the recording tape cartridge according to the eighth aspect, the reel is prohibited to be rotated with respect to the case by the rotating lock member located at the rotating lock position. In the rotating lock state, the reinforcing ring attached to the reel hub faces the rotating lock member from the radial outside with the gap of the predetermined value or less. Therefore, the radial position shift of the rotating lock member relative to the reel, that is, the radial position shift of the reel relative to the case is suppressed.

Thus, the reel of the invention has the excellent effect that the reel can ensure a proper attitude of the flange with respect to the reel hub. Additionally the recording tape cartridge of the invention has the excellent effect that the recording tape can well be protected by applying this reel.

### BRIEF DESCRIPTION OF THE DRAWINGS

Embodiments of the present invention will be described in detail with reference to the following figures, wherein:
Fig. 1 is an enlarged sectional view showing a main part of a reel according to an exemplary embodiment of the invention;
Fig. 2 is an exploded perspective view showing the reel according to the exemplary embodiment of the invention;
Fig. 3 is a perspective view showing the reel according to the exemplary embodiment of the invention;
Figs. 4A and 4B show an appearance of a recording tape cartridge to which the reel according to the exemplary embodiment of the invention is applied, Fig. 4A is a perspective view of the recording tape cartridge when the recording tape cartridge is viewed from above, and Fig. 4B is a perspective view of the recording tape cartridge when the recording tape cartridge is viewed from below;
Fig. 5 is a sectional view showing the recording tape cartridge to which the reel according to the exemplary embodiment of the invention is applied in rotary lock of the reel;
Fig. 6 is a sectional view showing the recording tape cartridge to which the reel according to the exemplary embodiment of the invention is applied in releasing the rotary lock of the reel; and
Figs. 7A to 7C are enlarged views showing reels according to comparative examples with respect to the exemplary embodiment of the invention, Fig. 7A is a sectional view of a first comparative example, Fig. 7B is a sectional view of a second comparative example, and Fig. 7C is a sectional view of a third comparative example.

### DETAILED DESCRIPTION OF THE INVENTION

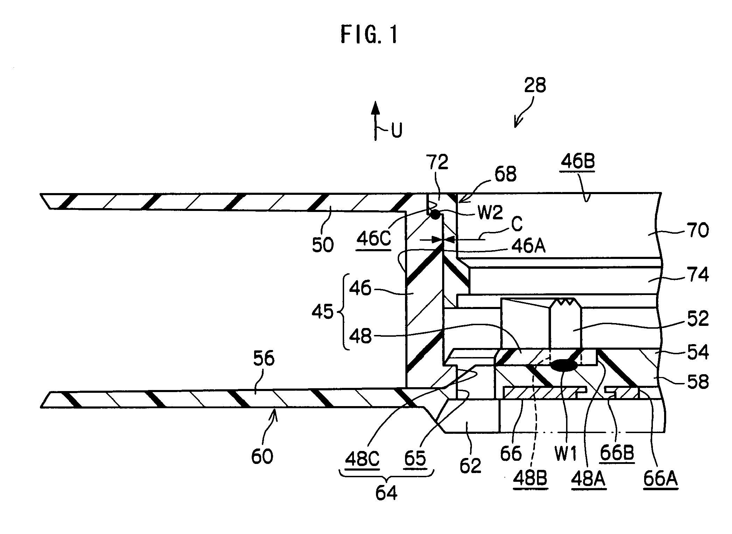

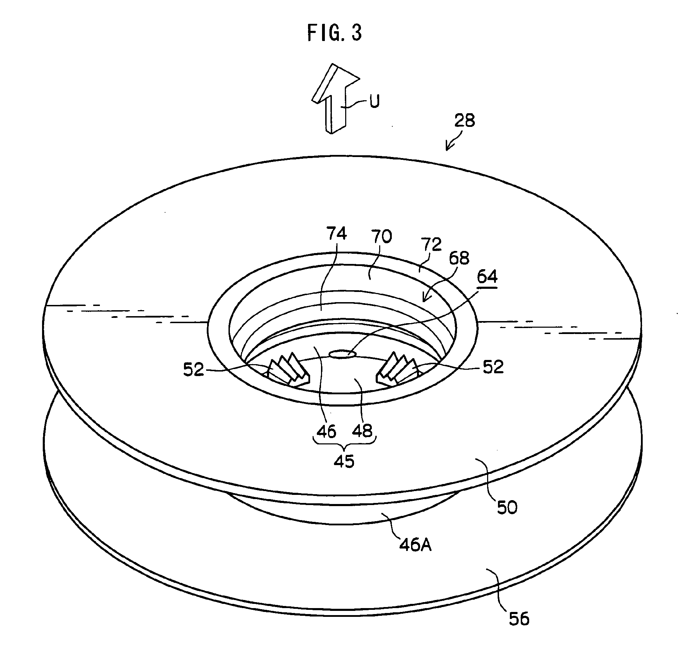

A reel 28 according to an exemplary embodiment of the present invention and a recording tape cartridge 10 to which the reel 28 is applied will be described with reference to Figs. 1 to 6. An entire configuration of the recording tape cartridge 10 will schematically be described first and a configuration of the reel 28 will be described in detail next.

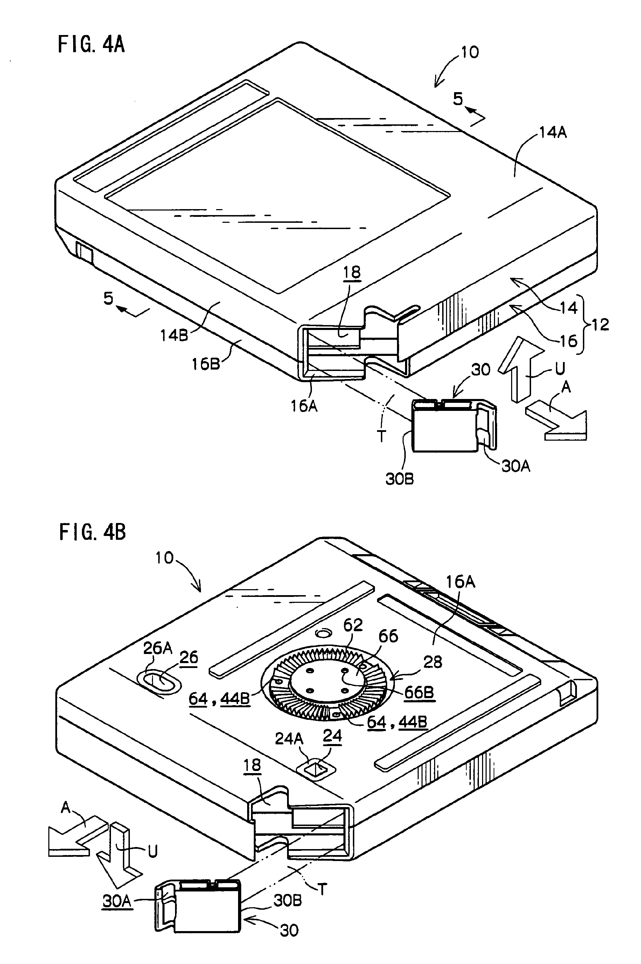

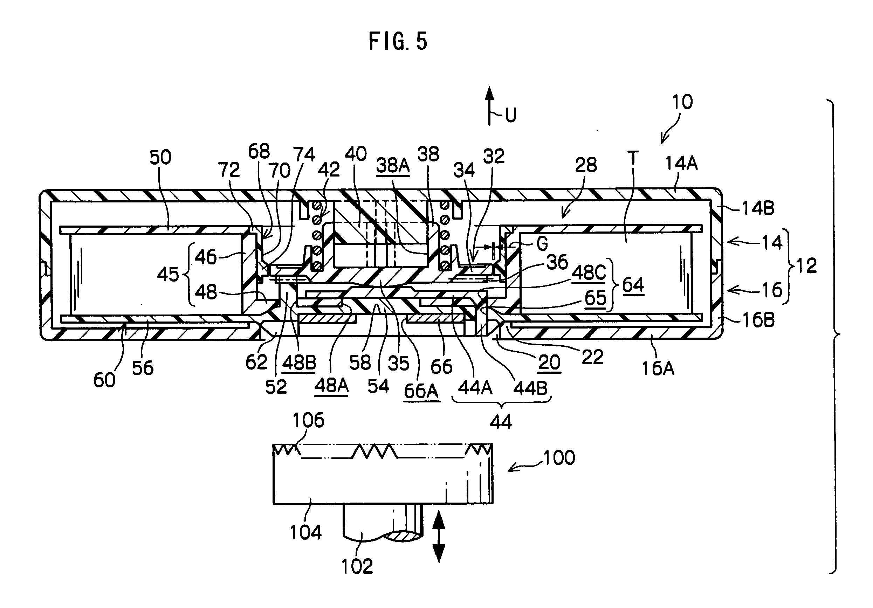

Fig. 4A is a perspective view of the recording tape cartridge 10 when the recording tape cartridge 10 is viewed obliquely from above, and Fig. 4B is a perspective view of the recording tape cartridge 10 when the recording tape cartridge 10 is viewed obliquely from below. Fig. 5 is a sectional view taken on a line 5-5 of Fig. 4A. An arrow A of Fig. 4 indicates a direction in which the recording tape cartridge 10 is loaded in a drive device. For the sake of convenience, in the following description, a side indicated by the arrow A is referred to as a front side, and a side indicated by an arrow U is referred to as an upper side.

As shown in Figs. 4 and 5, the recording tape cartridge 10 includes a case 12. The case 12 is formed by bonding an upper case 14 and a lower case 16. Specifically the upper case 14 is formed while a substantially frame-shaped peripheral wall 14B is vertically provided along an outer edge of a top plate 14A having a rectangular shape in planar view, and a lower case 16 is formed while a peripheral wall 16B is vertically provided along an outer edge of a bottom plate 16A having a shape substantially corresponding to the top plate 14A. In the case 12, the upper case 14 and the lower case 16 are bonded and formed into a substantial box shape by ultrasonic welding or screws while an opening end of the peripheral wall 14B and an opening end of the peripheral wall 16B abut on each other.

In the case 12, the top plate 14A, the peripheral wall 14B, the bottom plate 16A, and the peripheral wall 16B are notched in a corner portion on a head side in the direction in which the recording tape cartridge 10 is loaded in the drive device, and thereby forming an opening 18 which is inclined relative to the loaded direction. A circular gear opening 20 which is pierced through the bottom plate 16A is provided in a substantial center portion of the bottom plate 16A, and the gear opening 20 is used to expose a reel gear 62 described later. In an edge portion of the gear opening 20 in the bottom plate 16A, an annular rib 22 is projected toward the inside of the case 12 (see Fig. 5), and the rib 22 is used for positioning of a reel 28 described later.

A pair of positioning holes 24 and 26 is opened near a front end in an outer surface of the bottom plate 16A of the case 12. The pair of positioning holes 24 and 26 is made in a pouched shape in a projected portion (not shown) vertically provided from the bottom plate 16A toward the inside of the case 12, and the positioning holes 24 and 26 are disposed while separated from each other on a virtual line orthogonal to the loaded direction. The positioning hole 24 located closer to the opening 18 is formed into a substantially square shape in bottom view, and the positioning hole 24 is circumscribed in a positioning pin of the drive device. The positioning hole 26 is formed into a long hole along the virtual line, and a width of the positioning hole 26 corresponds to a diameter of the positioning pin. Therefore, when the recording tape cartridge 10 is loaded in the drive device to insert the positioning pins into the positioning holes 24 and 26, the recording tape cartridge 10 is correctly positioned in a horizontal direction (right and left, back and forth) in the drive device.

Portions around the positioning holes 24 and 26 in the bottom plate 16A are formed into positioning surfaces 24A and 26A which are finished smoother than other portions (design surface). The positioning surfaces 24A and 26A abut on positioning surfaces of the drive device provided around the positioning pins when the positioning pins are inserted into the positioning holes 24 and 26. Therefore, the positioning in the vertical direction is also performed in the drive device of the recording tape cartridge 10.

As shown in Fig. 5, a reel 28 is rotatably accommodated in the above mentioned case 12. Only one reel 28 is provided. A magnetic tape T which is of the recording tape is wound around the reel 28, and a leader block 30 which is of a drawing member is attached to a leading end of the magnetic tape T.

The leader block 30 is accommodated and retained inside the opening 18 of the case 12 when the recording tape cartridge 10 is not used. At this state, the leader block 30 closes the opening 18 to prevent dust from invading into case 12. An engagement recess 30A is formed at a leading end of the leader block 30. When the magnetic tape T is drawn in the drive device, the magnetic tape T is drawn from the case 12 by a drawing unit engaged with the engagement recess 30A, and the magnetic tape T is guided to the winding reel of the drive device. In the leader block 30, an end face on the opposite side to the engagement recess 30A is formed into an arc surface 30B, and the arc surface 30B is fitted in the winding reel to partially constitute the winding surface which winds the magnetic tape T.

The recording tape cartridge 10 includes a brake member 32 which is of the rotary lock member to prevent the rotation of the reel 28 when the recording tape cartridge 10 is not used. The brake member 32 mainly includes a disc portion 34, a braking gear 36, a cross projection 38, and a sliding contact projection 35. The disc portion 34 is formed into a disc shape. The braking gear 36 is formed downward in a peripheral portion of the disc portion 34. The cross projection 38 is projected upward from a axis center portion of the disc portion 34. The sliding contact projection 35 is projected downward from the axis center portion of the disc portion 34. An insertion groove 38A is formed in the cross projection 38, and the insertion groove 38A corresponding to the shape of the cross projection 38 is formed into a substantially cross shape in a planar view. A cross rib 40 hanging from the top plate 14A is inserted into the insertion groove 3 8A while being relatively movable (slidable) in a vertical direction. Therefore, the brake member 32 may not be rotated with respect to the case 12, and the brake member 32 may relatively be displaced in the vertical direction with respect to the case 12.

The braking gear 36 of the brake member 32 is engaged with an engagement gear 52 (described later) projected upward from a bottom plate 48 constituting the reel 28, thereby preventing the rotation of the reel 28 with respect to the case 12. The braking gear 36 is moved with respect to the case 12 in the vertical direction (the axis line direction of the reel 28), thereby switching between the engagement of the braking gear 36 with the engagement gear 52 (rotary lock position) and the engagement release (rotary permission position). A compression coil spring 42 is provided in the recording tape cartridge 10 to bias the brake member 32 toward the side of the bottom plate 48, and the braking gear 36 of the brake member 32 is biased toward a braking position at which the braking gear 36 is engaged with the engagement gear 52.

The recording tape cartridge 10 includes a release pad 44 which is of a release member. The release pad 44 releases the rotary lock state in which the brake member 32 locks the reel 28 with respect to the case 12. The release pad 44 includes a plate-like main body portion 44A having a substantially equilateral triangle shape in planar view and leg portions 44B projected downward from tops of the main body portion 44A. In the release pad 44, the plate-like main body portion 44A is pressed against the sliding contact projection 35 of the brake member 32 whose braking gear 36 is engaged with the engagement gear 52, and each leg portion 44B is pierced through a unlock hole (lock release hole) 64 formed in the bottom plate 48 of the reel 28. The portion projected toward the outside (lower side) of the reel 28 in each leg portion 44B is pressed upward, whereby the brake member 32 is moved upward along with the release pad 44 to the rotary permission position at which the engagement is released between the braking gear 36 and the engagement gear 52.

In the exemplary embodiment, the leg portion 44B of the release pad 44 is pressed upward by a drive gear 106 of the rotary shaft 100 of the drive device, and the brake member 32 is moved from the braking position to the release position against a biasing force of the compression coil spring 42.

Additionally, the rotary shaft 100 includes a rotary table 104 fixed to an upper end of a rotating shaft 102, and the drive gear 106 which may be engaged with a reel gear 62 of the reel 28 is formed upward in the peripheral portion of the rotary table 104. Therefore, the rotary shaft 100 is moved upward relative to the case 12 to engage the drive gear 106 with the reel gear 62. A disc-shaped magnet (not shown) is provided in the radial inside of the drive gear 106 in the rotary table 104, and the reel plate 66 of the reel 28 is attracted by a magnetic force of the magnet.

In the recording tape cartridge 10 described above, during the rotation of the reel 28 (drawing or winding of the magnetic tape T), the relative rotation is generated between the sliding contact projection 35 (brake member 32) which is not rotated with respect to the case 12 and the release pad 44 which is rotated along with the reel 28, and the leading end (lower end) of the sliding contact projection 35 and the upper surface of the release pad 44 are slid by the relative rotation while contacting each other.

### (Configuration of Reel)

As shown in Figs. 1 to 3, the reel 28 includes a reel hub 45 constituting a axis center portion thereof. The reel hub 45 is formed into a substantially cylindrical shape with a bottom, and the reel hub 45 includes a cylindrical wall 46 and the bottom plate 48. An outer circumferential surface of the cylindrical wall 46 constitutes a tape winding surface 46A around which the magnetic tape T is wound. The bottom plate 48 is of a bottom portion which closes a lower portion of the cylindrical wall 46. An upper flange 50 which is of the flange of the aspect of the invention is extended coaxially and integrally toward the radial outside from the upper end of the cylindrical wall 46 of the reel hub 45, that is, from an opening end 46B. In the exemplary embodiment, the opening end 46B of the cylindrical wall 46 is flush with the upper surface of the upper flange 50.

A circular center hole 48A is formed in a axis center portion of the bottom plate 48 of the reel hub 45. A window portion 48B is also formed in the bottom plate 48 in order to project the engagement gear 52, which provided in a center portion 58 of a lower flange member 60 (will be mentioned later), above its upper surface thereof The plural window portions 48B (six window portions whose number is matched with that of the engagement gears 52) are provided along a circumference which is coaxial with the reel hub 45. A through-hole 48C is formed in the bottom plate 48 in order to insert the leg portion 44B of the release pad 44. The three through-holes 48C are provided at equal intervals along a circumference which is coaxial with and larger than the circumference on which the plural window portions 48B are arranged.

In the reel hub 45 described above, the cylindrical wall 46 and the bottom plate 48 which are of the main parts are integrally formed by resin molding. In the exemplary embodiment, the upper flange 50 and the reel hub 45 are integrally formed by the resin molding.

As shown in Figs. 1 to 3, the reel 28 also includes a lower flange 56 which is of the flange portion facing the upper flange 50. The lower flange 56 is integrally extended toward the radial outside from the center portion 58 which is of the center portion bonded to the bottom plate 48 of the reel hub 45 (bonding structure is described later), and the lower flange 56 is fixedly retained by the reel hub 45 while the center portion 58 is interposed therebetween. The lower flange 56 and the center portion 58 constitute the lower flange member 60 which is of the flange member.

The reel gear 62 which can be engaged with the drive gear 106 of the rotary shaft 100 of the drive device is formed downward in the center portion 58 of the lower flange member 60. In the reel gear 62, plural teeth are arrayed so as to form an annular shape which is coaxial with the lower flange member 60, that is, the reel 28 as a whole.

On the other hand, the engagement gear 52 which can be engaged with the braking gear 36 of the brake member 32 is formed upward from the upper surface side of the center portion 58. That is, as described above, the engagement gear 52 is engaged with the braking gear 36 of the brake member 32 which is located at the braking position, and the engagement of the engagement gear 52 with the braking gear 36 of the brake member 32 is released to permit rotation of the reel 28 about the axis thereof when the brake member 32 is located at the release position. In the exemplary embodiment, the plural (six) engagement gears 52 are provided along the circumference which is coaxial with the reel hub 45, and each engagement gear 52 can be pierced through the corresponding window portion 48B of the reel hub 45.

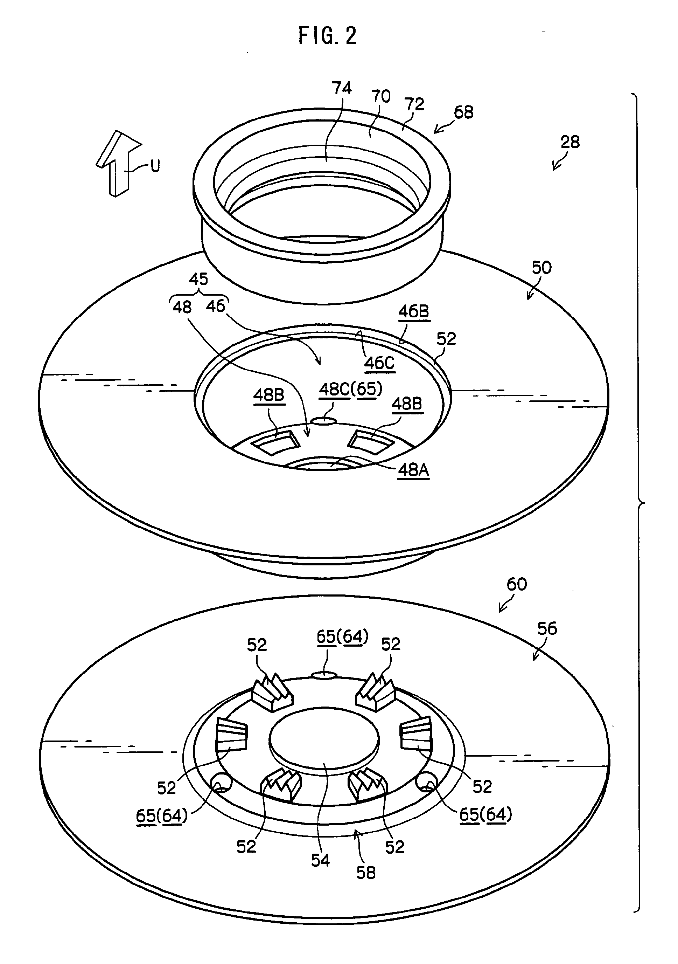

As shown in Fig. 2, a circular projection 54 which can be fitted in the center hole 48A of the reel hub 45 is provided upward from the axis center portion of the center portion 58. Through-holes 65 are formed near the periphery of the center portion 58. The through-hole 65 and the through-hole 48C of the reel hub 45 constitutes the unlock hole 64, and the leg portion 44B of the release pad 44 located in the reel hub 45 is projected toward the outside (lower side) of the reel hub 45 through the unlock hole 64. The through-holes 65, that is, the unlock holes 64 are arranged at equal intervals on a circumference in a region where the reel gear 62 is placed. Accordingly, the reel gear 62 is circumferentially divided by the unlock holes 64 (tooth of the reel gear 62 is not provided around the unlock hole 64).

In the lower flange member 60, the lower flange 56, the center portion 58, the engagement gears 52, the circular projection 54, and the reel gear 62 which are of the main parts are integrally formed by the resin molding.

As shown in Figs. 1 and 5, the reel plate 66 which is of the metal plate made of a magnetic material is fixedly provided in the center portion 58. The reel plate 66 is formed into a substantial disc shape having a hole 66A in the axis center portion, and the reel plate 66 is coaxially disposed on the radial inside of the reel gear 62. The reel plate 66 is attracted in a noncontact manner by the magnetic force of the magnet provided in the rotary shaft 100 of the drive device.

The reel plate 66 is fixed to the center portion 58, that is, the lower flange member 60 by the insert molding. Specifically, plural (in the exemplary embodiment, four) small holes 66B are made in the reel plate 66 while pierced in a plate thickness direction of the reel plate 66, and the small holes 66B are circumferentially disposed at equal intervals along a virtual circle which is coaxial with the hole 66A. In each small hole 66B, the diameter is enlarged on the lower surface side of the reel plate 66 to form a so-called pillbox shape. The resin material is injected into a die, and each small hole 66B is filled with the resin material. The resin material is cooled and solidified, whereby the reel plate 66 is strongly fixed to the lower flange member 60.The reel plate 66 may be fixed to the lower flange member 60 by calking.

As described above, the lower flange member 60 is bonded to the bottom plate 48 of the reel hub 45 in the center portion 58. Specifically, a welding projection (energy director, not shown) is provided from the lower surface of the bottom plate 48 before the welding, an ultrasonic vibration is imparted while the welding projection abuts on the upper surface of the center portion 58, thereby performing the ultrasonic welding between the reel hub 45 and the lower flange member 60 in the portion where the welding projection is placed.

The welding portion is designated by the numeral W1 of Fig. 1. As may be seen from Fig. 1, the reel hub 45 and the lower flange member 60 are bonded to each other within a region where the reel plate 66 is placed. More specifically, as shown in Fig. 1, the welding portions W1 is formed along a circumference, and a diameter of the circumference is smaller than inner peripheries of the engagement gears 52 and reel gear 62, and the diameter of the circumference is larger than an inner diameter of the hole 66A, an outer diameter of the circular projection 54, and a diameter of the virtual circle on which the small holes 66B are arranged. In the exemplary embodiment, the welding portion W1 is circumferentially divided into plural portions so as to form plural arc shapes in a planar view.

The reel 28 according to the exemplary embodiment of the invention includes a reinforcing ring 68 which is integrally provided on an inner circumferential side of the cylindrical wall 46 of the reel hub 45. In the exemplary embodiment, the reinforcing ring 68 is provided only in an upper portion of the reel hub 45 in the axis line direction of the reel hub 45, including the opening end 46B of the cylindrical wall 46 of the reel hub 45. The specific description will be made below.

The reinforcing ring 68 mainly includes a ring body 70, an outer flange portion 72, and an inner flange portion 74. The ring body 70 is formed into a short cylindrical shape having a length of about a half of the cylindrical wall 46 of the reel hub 45. The outer flange portion 72 is projected toward an outwardly radial direction from an upper end portion of the ring body 70. The inner flange portion 74 is projected toward an inwardly radial direction from a lower portion of the ring body 70. The reinforcing ring 68 is configured such that a predetermined clearance C (see Fig. 1) is formed between the outer circumferential surface of the ring body 70 and the inner circumferential surface of the cylindrical wall 46.

In the exemplary embodiment, sizes (tolerance) of the cylindrical wall 46 of the reel hub 45 and the ring body 70 of the reinforcing ring 68 are determined such that the clearance C becomes 0 mm < C ≤ 0.05 mm. That is, the ring body 70 is attached to the cylindrical wall 46 of the reel hub 45 by loose fit. The same clearance C is set between the outer circumferential surface of the outer flange portion 72 and an inner circumferential surface of a recess 46C (described later).

The reinforcing ring 68 is fixed to the reel hub 45 by welding the lower surface of the outer flange portion 72 to the recess (step portion) 46C. The recess 46C is provided at the upper end of the cylindrical wall 46 of the reel hub 45 so as to be opened upward and radially inward. In the welded state, the upper surface of the outer flange portion 72 is substantially flush with the upper surface of the upper flange 50. A numeral W2 denotes a welded portion. A welded portion W2 is formed by ultrasonic welding the cylindrical wall 46 of the reel hub 45 and the outer flange portion 72 of the reinforcing ring 68.

That is, in the exemplary embodiment, the reinforcing ring 68 is made of a resin material which can be welded to the resin reel hub 45. Specifically, the reinforcing ring 68 is made of the resin material in which a Young's modulus of about 9000 MPa is obtained by adding mica to polycarbonate (PC), while the reel hub 45 is made of polycarbonate (PC). The ring body 70 has a thickness of about 1 mm.

The inner flange portion 74 is formed into a ring shape whose inner diameter is slightly larger than the outer diameter of the brake member 32. As shown in Fig. 5, when the braking gear 36 of the brake member 32 is engaged with the engagement gear 52, that is, when the brake member 32 is located at a rotary lock position, the inner circumferential surface of the inner flange portion 74 faces the outer circumferential surface of the brake member 32 with a distance G which is a predetermined value or less. At this point, the distance G is set so as to range from 0.1 mm to 0.3 mm. Therefore, radial movement of the reel 28 is regulated with respect to the case 12 while the brake member 32 is interposed therebetween.

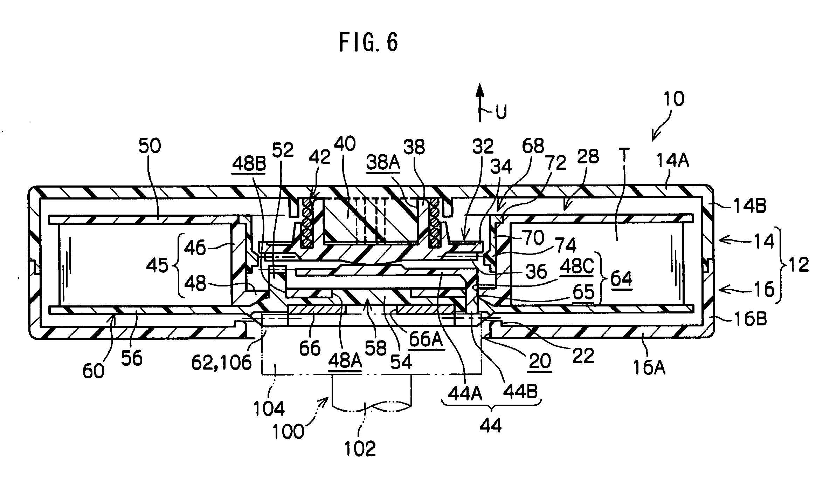

On the other hand, as shown in Fig. 6, when the brake member 32 is located at the rotary permission position, the inner flange portion 74 is not located on the outside in the radial direction of the brake member 32. That is, the inner flange portion 74 is disposed such that overlap with brake member 32 in an axis line direction is eliminated by a stroke (movement) along the axis line direction between the rotary lock position and the rotary permission position of the brake member 32.

The action of the exemplary embodiment will be described below.

In the recording tape cartridge 10 having the above-described configuration, when the recording tape cartridge 10 is not used, the brake member 32 is located at the rotary lock position by the biasing force of the compression coil spring 42, and the brake member 32 engages the braking gear 36 with the engagement gear 52. Therefore, the reel 28 is prevented from being rotated relative to the case 12. At this point, the reel gear 62 of the reel 28 is exposed from the gear opening 20, and the leg portion 44B of the release pad 44 is projected through the unlock hole 64 to face the gear opening 20 while being able to be pressed from the outside.

On the other hand, in using the magnetic tape T, the recording tape cartridge 10 is loaded into a bucket (not shown) of the drive device along the direction of the arrow A. When the recording tape cartridge 10 is loaded into the up to a predetermined depth, the bucket is lowered, and the rotary shaft 100 of the drive device is relatively brought close to (move upward) the gear opening 20 of the case 12 to retain the reel 28. Specifically, the rotary shaft 100 engages the drive gear 106 of the rotary shaft 100 with the reel gear 62 while attracting and retaining the reel plate 66 in a non-contact manner using the magnet.

The rotary shaft 100 upwardly presses the release pad 44 whose leg portion 44B abutting on a tooth tip of the drive gear 106 in accordance with the engagement between the reel gear 62 and the drive gear 106, that is, the movement of the rotary shaft 100 on the axial direction proximity side relative to the case 12. Then the release pad 44 is moved upward in the axis line direction of the reel 28 against the biasing force of the compression coil spring 42 by the pressing force while guided by the unlock hole 64 in the leg portion 44B. Therefore, in the sliding contact projection 35, the brake member 32 abutting on the main body portion 44A of the release pad 44 is also moved upward to release the engagement between the braking gear 36 of the brake member 32 and the engagement gear 52. That is, the brake member 32 reaches the rotary permission position relative to the reel 28. When the rotary shaft 100 is further relatively moved upward, the reel 28 is lifted along with the release pad 44 and the brake member 32 (while the relative position is not changed) against the biasing force of the compression coil spring 42, and the lower flange 56 is separated from the annular rib 22 while the brake member 32 reaches the absolute rotary permission position (relative to the case 12). Therefore, the reel 28 is floated in the case 12, and the reel 28 becomes able to be rotated while not brought into contact with the inner surface of the case 12.

The positioning pins of the drive device invade into the positioning hole 24 and 26 of the case 12 by lowering the bucket, that is, the recording tape cartridge 10 in the drive device, and the positioning surfaces of the drive device abut on the positioning surfaces 24A and 26A of the case 12. Therefore, the recording tape cartridge 10 is positioned in the horizontal and vertical directions with respect to the drive device. Then the drawing unit of the drive device draws the leader block 30 from the case 12 to guide the leader block 30 to the winding reel of the drive device while a drawing pin (not shown) of the drawing unit is engages with the engagement recess 30A of the leader block 30. The leader block 30 is fitted in the winding reel, and the arc surface 30B partially constitutes a winding surface which winds the magnetic tape T.

At this state, when the leader block 30 is rotated integral with the winding reel, the magnetic tape T is drawn from the case 12 through the opening 18 while wound around the reel hub of the winding reel. At this point, the reel 28 of the recording tape cartridge 10 is rotated in synchronization with the winding reel by the torque of the rotary shaft 100, which is transmitted by the drive gear 106 engaged with the reel gear 62. The information is recorded in the magnetic tape T or the information recorded in the magnetic tape T is reproduced by a recording and reproducing head provided along a predetermined tape path of the drive device. At this point, the sliding contact projection 35 of the brake member 32 which may not be rotated relative to the case 12 is slid and contacted to the main body portion 44A of the release pad 44 which is rotated relative to the case 12 along with the reel 28.

On the other hand, the bucket in which the recording tape cartridge 10 is loaded is lifted when the magnetic tape T is rewound around the reel 28 to retain the leader block 30 in the neighborhood of the opening 18 of the case 12. Then abutment is released between the drive gear 106 and the leg portion 44B of the release pad 44 while the engagement is released between the reel gear 62 and the drive gear 106, the release pad 44 is moved downward along with the brake member 32 by the biasing force of the compression coil spring 42. Therefore, the brake member 32 is returned to a braking position at which the braking gear 36 of the brake member 32 is engaged with the engagement gear 52. In accordance with the operation in which the brake member 32 and the release pad 44 are moved by the biasing force of the compression coil spring 42, the reel 28 is also moved downward and returned to the initial state in which the reel gear 62 is exposed from the gear opening 20 while the lower flange 56 of the reel 28 abuts on the annular rib 22. At this state, the recording tape cartridge 10 is discharged from the bucket.

In producing the reel 28 constituting the recording tape cartridge 10, the reel hub 45 including the upper flange 50, the lower flange member 60, and the reinforcing ring 68 are separately formed by resin molding. The reel plate 66 is integrated with the lower flange member 60 by insert molding.

Then the reinforcing ring 68 is fixed to the reel hub 45. Specifically, an ultrasonic vibration is generated from an ultrasonic horn while the outer flange portion 72 and the cylindrical wall 46 are clamped between a receiving table (not shown) abutting on the lower end surface of the cylindrical wall 46 of the reel hub 45 and the ultrasonic horn abutting on the upper surface of the outer flange portion 72 of the reinforcing ring 68, thereby performing ultrasonic welding of the reel hub 45 and the reinforcing ring 68.

Then, the lower flange member 60 is fixed to the reel hub 45. Specifically, the engagement gear 52 of the lower flange member 60 is inserted in the window portion 48B of the reel hub 45 while the circular projection 54 is fitted in the center hole 48A of the reel hub 45, and centering (positioning) is performed to the lower flange member 60 relative to the reel hub 45. The ultrasonic vibration is generated from the ultrasonic horn, while the bottom plate 48, the center portion 58 and the reel plate 66 are clamped between "the receiving table (not shown) abutting on the reel plate 66 at an area (between the reel gear 62 and each small hole 66B) including a backside portion of the surface abutting on the welding projection of the center portion 58" and "the ultrasonic horn abutting on the backside of the surface having the welding projection of the bottom plate 48 (upper surface of the bottom plate 48)", thereby performing the ultrasonic welding of the reel hub 45 and the lower flange member 60. Therefore, the reel hub 45 and the lower flange member 60 are fixed to each other to form the reel 28 in which the upper flange 50 and the lower flange 56 protect the magnetic tape T wound around the tape winding surface 46A.

The rigidity on the side of the bottom plate 48 (lower end side) tend to become larger than the rigidity on the side of the opening end 46B, in the reel having the reel hub 45 in which the bottom plate 48 is provided in one of end portions in the axis line direction of the cylindrical wall 46 while the opening end 46B is formed in the other end portion of the cylindrical wall 46.

In the reel 28 according to the exemplary embodiment of the invention, because the lower flange 56 is formed independently from the reel hub 45, the increase in rigidity in the radial direction is prevented on the side of the bottom plate 48 in the reel hub 45. On the other hand, in the reel 28, because the upper flange 50 is integrally extended from the opening end 46B of the cylindrical wall 46, the rigidity in the radial direction is increased on the side of the opening end 46B. Therefore, in the reel 28, a difference in rigidity between the upper and lower ends of the cylindrical wall 46 becomes small in the reel hub 45. In the reel 28, because the reinforcing ring 68 is attached to the upper portion of the cylindrical wall 46 of the reel hub 45, the difference in rigidity between the upper and lower ends of the cylindrical wall 46 is suppressed to a small level in the reel hub 45.

In the reel of the exemplary embodiment, the radial rigidity is substantially equalized in the vertical direction of the cylindrical wall 46 of the reel hub 45. Therefore, the deformation of the cylindrical wall 46 of the reel hub 45 is suppressed in the state where the magnetic tape T is wound around the tape winding surface 46A, and the curvature of the magnetic tape T may be suppressed. Particularly, the deformation of the reel hub 45 of the resin reel 28 is effectively suppressed in a creep environment.

This point will be described in detail with reference to Table 1 showing comparison result and comparative examples. Table 1 shows numerical analysis results (decimals are rounded) of deformation amounts at upper and lower ends of the cylindrical wall 46 of the reel hub 45 and differences between the upper and lower deformation amounts in two types of creep environments. Each deformation amount is a deformation amount from the state that is before the magnetic tape T is wound. An environmental temperature of 40°C, relative humidity of 80%, and a retention period of one week are set as a first creep environment, and an environmental temperature of 60°C, relative humidity of 90%, and a retention period of one week are set as a second creep environment. The magnetic tape T is wound under the following predetermined conditions on the cylindrical wall 46 of the reel hub 45 of the exemplary embodiment: the tape winding surface 46A has an outer diameter of 44 mm, the magnetic tape T has a width of 12.65 mm (1/2 inch), a thickness of 6.6 µm, and a length of 820 m, and the magnetic tape T is wound around the tape winding surface 46A of the reel hub 45 while a tension of 70 g per section (above mentioned width x thickness).

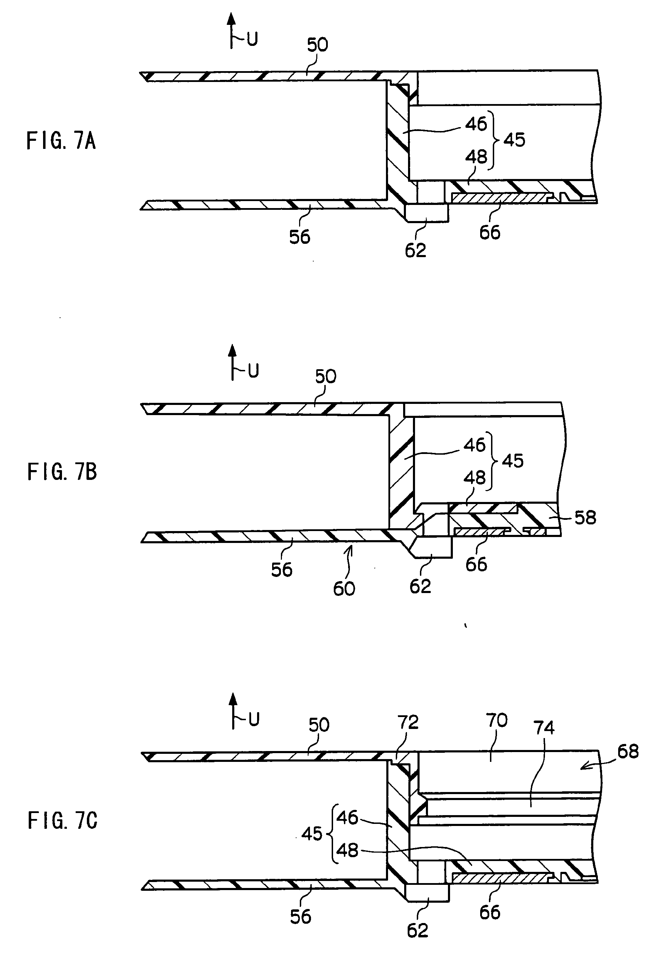

As shown in Fig. 7A, in a first comparative example, the lower flange 56 is integrally extended from the lower end of the cylindrical wall 46, and the upper flange 50 which is of an independent member is welded to the opening end 46B of the cylindrical wall 46. As shown in Fig. 7B, a reel of a second comparative example is similar to the reel 28 of the exemplary embodiment in that the upper flange 50 is integrally extended from the opening end 46B while the lower flange member 60 is bonded to the bottom plate 48, however, the reel of the second comparative example differs from the reel 28 in that reinforcing ring 68 is not provided. As shown in Fig. 7C, a reel of a third comparative example is similar to the reel 28 in that reinforcing ring 68 is provided, however, the reel of the third comparative example differs from the reel 28 in that the lower flange 56 is integrally extended from the lower end of the cylindrical wall 46 while the upper flange 50 is formed independently of the reel hub 45. In the third comparative example, although the upper flange 50 and the reinforcing ring 68 are integrally formed, it is considered that the integral formation of the upper flange 50 and the reinforcing ring 68 has no influence on the reinforcing effect.

**[Table 1]**

| Reel | 40°C RH80% | | | 60°C RH90% | | |
|---|---|---|---|---|---|---|
| | Upper end | Lower end | Difference | Upper end | Lower end | Difference |
| The exemplary embodiment | 33 | 39 | -6 | 41 | 36 | 5 |
| The first comparative example | 83 | 12 | 71 | 130 | 12 | 118 |
| The second comparative example | 60 | 41 | 19 | 95 | 35 | 60 |
| The third comparative example | 56 | 13 | 42 | 85 | 14 | 71 |

Table 1 shows that, in the first comparative example in which the rigidity at the lower end of the reel hub 45 is higher than that at the upper end, although the deformation amount at the lower end is suppressed to a small level under each condition, the difference in deformation amount between the upper and lower ends is increased because the deformation amount at the upper end becomes extremely larger than that at the lower end. In the second comparative example, compared with the first comparative example, the rigidity at the lower end is low and the rigidity at the upper end is high. When compared with the first comparative example, the deformation amount at the lower end is increased while the deformation amount at the upper end is decreased, and the difference in deformation amount between the upper and lower ends becomes smaller. In the third comparative example, compared with the first comparative example, the rigidity at the lower end is substantially same while the rigidity at the upper end is increased. When compared with the first comparative example, the deformation amount at the lower end is substantially same while the deformation amount at the upper end is decreased, and the difference in deformation amount between the upper and lower ends becomes smaller. However, the difference in deformation amount between the upper and lower ends becomes larger compared with the second comparative example in which the deformation amount at the lower end is increased.

On the other hand, in the reel 28 of the exemplary embodiment, the difference in rigidity between the upper and lower ends is substantially equalized as described above, the reel hub 45, that is, the difference in deformation amount between the upper and lower ends of the tape winding surface 46A is suppressed to an extremely small level. Particularly, under the severer creep condition (environmental temperature of 60°C, relative humidity of 90%, retention period of one week), it is confirmed in the exemplary embodiment that the difference in deformation amount between the upper and lower ends becomes 10% or less of each comparative example.

The effect may be achieved in theory by, for example, enhancing the rigidity of the reinforcing ring 68 of the third comparative example. However, in this case, various restrictions are generated. In the case where the rigidity is enhanced in the resin reinforcing ring 68, moldability is lowered when the additive amount of mica is increased, and a countermeasure for avoiding interference with the brake member 32 is required when the thickness of the ring body 70 is increased. In the case where the reinforcing ring 68 is made of metal to enhance the rigidity, cost is increased because the metal material is selected such that the magnetic tape T is not influenced by the metal material, and the mass of the reel 28 is increased and the moldability or an assembling property is deteriorated.

On the other hand, in the reel 28 of the embodiment, not only that the reinforcing ring 68 is simply provided, but also that the increase in rigidity is suppressed at the lower end of the reel hub 45 by providing the lower flange 56 as the separate member, the rigidity is increased at the upper end of the reel hub 45 by integrally molding the upper flange 50, and the reinforcing ring 68 is provided only in the upper portion of the cylindrical wall 46. Therefore, without the various restraints mentioned above, it is realized that the rigidity is substantially equalized at both the ends in the axis line direction of the reel hub 45 using the small and light-weight reinforcing ring 68.

Accordingly, in the reel 28, the deformation of the tape winding surface 46A of the reel hub 45 substantially becomes symmetrical relative to the center portion in the axis line direction (vertical direction) while the magnetic tape T is wound around the reel hub 45, so that the curvature (tape curvature, see JJS X6175) of the magnetic tape T wound around the reel hub 45 can be suppressed. It is well known that the tape curvature is relatively small at room temperature but increased as the retention environmental temperature and humidity of the magnetic tape T is raised. In the reel 28, the tape winding surface 46A is substantially symmetrically deformed in relation to the vertical direction (vertical symmetry is maintained) under the environment in which the tape curvature is easily increased, so that tape curvature can effectively suppressed to a small level.

In the reel 28, the reinforcing ring 68 is provided independently from the reel hub 45, so that the upper flange 50 can be formed with good dimensional accuracy. In the reel 28, the predetermined clearance C is set between the ring body 70 of the reinforcing ring 68 and the cylindrical wall 46 of the reel hub 45, so that the tape winding surface 46A can be formed with good dimensional accuracy. In the configuration in which the metal reinforcing ring is formed by the insert molding, there may be possibly of the reinforcing ring obstructs resin shrinkage in the opening end 46B during the molding to affect the dimensional accuracy of the upper flange 50. In the configuration in which the reinforcing ring is press-fitted in the reel hub 45, there may be possibly of the deformation of the cylindrical wall 46 when press fitting affects the dimensional accuracy of the tape winding surface 46A. However, in the reel 28, the upper flange 50 and the tape winding surface 46A can be formed with good dimensional accuracy.

The clearance C between the ring body 70 of the reinforcing ring 68 and the cylindrical wall 46 of the reel hub 45 is set in the range of 0 mm<C≤0.05 mm, so that the sufficient reinforcing effect (improvement of the rigidity in the upper portion of the cylindrical wall 46 of the reel hub 45) can be obtained by the reinforcing ring 68. Particularly the sufficient reinforcing effect can be obtained in the creep environment.

In the reel 28, the reinforcing ring 68 is welded to the reel hub 45 at the lower surface of the outer flange portion 72 projected in the radial direction of the ring body 70, so that the reinforcing ring 68 can securely be fixed to the reel hub 45 in the configuration in which the clearance C is set. On the other hand, because the clearance C of the dimension is set, the reinforcing ring 68 can easily be inserted into the reel hub 45 and accurately be positioned with respect to the reel hub 45 (centering can accurately be performed).

Because the reel 28 has the structure in which the lower flange 56 is fixed to the reel hub 45 (cylindrical wall 46) by bonding the center portion 58 to the bottom plate 48, the lower flange 56 is hardly deformed in accordance with the deformation of the cylindrical wall 46, which is caused by the winding pressure of the magnetic tape T. Particularly, in the reel 28, because the center portion 58 is bonded to the bottom plate 48 in the region where the reel plate 66 in the lower flange member 60 is placed, in other words, because the center portion 58 is bonded to the reel hub 45 in the high-rigidity portion (portion reinforced by the reel plate 66) in the lower flange member 60, the deformation such that swing is generated in the thickness direction is hardly generated in the lower flange 56. Therefore, in the reel 28, the runout in the thickness direction of an outer circumferential edge of the lower flange 56 can be decreased to 1/3 to 1/2 when compared with the configuration in which the inner edge of the lower flange 56 is bonded to the lower end surface of the cylindrical wall 46.

Thus, in the reel 28, the lower flange 56 has the high dimensional accuracy with respect to the reel hub 45, and the deformation (runout) in the lower flange 56 caused by the deformation of the cylindrical wall 46 due to the winding pressure of the magnetic tape T is suppressed to a small level, so that a proper posture of the lower flange 56 can be ensured with respect to the reel hub 45 in each state. In the reel 28, because the cylindrical wall 46 of the reel hub 45 is reinforced by the reinforcing ring 68, the deformation caused by the winding pressure of the magnetic tape T is suppressed in the upper portion of the cylindrical wall 46, and the deformation (runout) caused by the deformation of the cylindrical wall 46 is suppressed in the upper flange 50.

In the recording tape cartridge 10 including the reel 28 as described above, the upper flange 50 and the lower flange 56 have the high dimensional accuracy with respect to the reel hub 45, that is, the tape winding surface 46A, and the runout (reduction of the distance between the surfaces facing each other) is suppressed in the upper flange 50 and the lower flange 56. Therefore, the interference of the magnetic tape T with the upper flange 50 and the lower flange 56 is prevented to protect the magnetic tape T when the magnetic tape T is drawn from and inserted in the case 12.

In the recording tape cartridge 10, the inner flange portion 74 of the reinforcing ring 68 faces the brake member 32 located at the rotation lock position with the distance G that is the predetermined value or less. Therefore, the radial displacement of the brake member 32 relative to the reel 28, that is, the radial position shift of the reel 28 relative to the case 12 can be suppressed. Accordingly, even in the vertical type drive device, the recording tape cartridge 10 of the present invention is not radially shifted in the period until the recording tape cartridge 10 is attracted by and engaged with the rotary shaft 100, and the recording tape cartridge 10 is properly retained in the rotary shaft 100.

In the exemplary embodiment, for the region where the reel gear 62 is formed, the unlock hole 64 is provided. However, the invention is not limited to the exemplary embodiment, and various modifications may be made. Accordingly, for example, in the recording tape cartridge 10 applying the reel 28, other structures may be adopted to the structure for stopping the rotation of the reel 28 and the structure for releasing the stop of the rotation.

In the exemplary embodiment, the reinforcing ring 68 is made of the resin material to which mica is added. However, the invention is not limited to the exemplary embodiment. For example, the reinforcing ring 68 may be made of metal, a resin material which does not contain the reinforcing material, or a resin which includes glass fiber or carbon fiber as the reinforcing fiber.

In the exemplary embodiment, the lower flange 56 is bonded to the reel hub 45 with the center portion 58 interposed therebetween. However, the invention is not limited to the exemplary embodiment. For example, the lower flange 56 may be bonded to the reel hub 45 at the inner edge portion of the lower flange 56 which is formed into an annular shape.

## Claims

1. A reel comprising:
a reel hub that is made of a resin material and is formed into a cylindrical shape having a bottom portion;
a flange that is made of a resin material and is provided integrally at the reel hub so as to extend outwardly in a radial direction of the reel hub from an opening end of the reel hub;
a flange member that is made of a resin material and is bonded to an end portion on the bottom portion of the reel hub, the flange member having a flange portion facing the flange; and
a reinforcing ring that reinforces the reel hub in the radial direction and is attached to a part of the reel hub in an axis line direction of the reel hub, the part including the opening end.

2. A reel comprising:
a reel hub that is made of a resin material and is formed into a cylindrical shape having a bottom portion;
a flange that is made of a resin material and is provided integrally at the reel hub so as to extend outwardly in a radial direction of the reel hub from an opening end of the reel hub;
a flange member that is made of a resin material and is bonded to the bottom portion of the reel hub within a range where a metal plate attached to a center portion of the flange member overlaps the bottom portion of the reel hub in an axis line direction of the reel hub, the flange member having a flange portion facing the flange; and
a reinforcing ring that reinforces the reel hub in the radial direction and is attached to a part of the reel hub in the axis line direction, the part including the opening end.

3. The reel of claim 1 or 2, wherein the reinforcing ring is attached to the reel hub such that a clearance is radially formed between the reinforcing ring and an inner circumference of the reel hub.

4. The reel of claim 3, wherein a clearance of 0.05 mm or less is set between the inner circumference of the reel hub and an outer circumference of the reinforcing ring.

5. The reel of claim 1 or 2, wherein the reinforcing ring is fixed to the reel hub by welding.

6. The reel of claim 5, wherein the reinforcing ring is fixed to the reel hub by welding in a face portion orientated toward the axis line direction of the reel hub.

7. The reel of claim 6, wherein
the reinforcing ring includes an outer flange portion provided so as to extend outwardly in the radial direction,
a step portion at which the face portion is formed is formed at the opening end of the reel hub, and
a lower face of the outer flange portion is fixed to the face portion by welding.

8. A recording tape cartridge comprising:
a case; and
a reel of claim 1 or 2

9. The recording tape cartridge of claim 8, further comprising a rotation lock member that is provided in the reel hub so as to be able to be relatively displaced in the axis line direction of the reel hub with respect to the case, the rotation lock member being switched between a rotation lock position and a rotation permission position by the relative displacement, rotation of the reel with respect to the case being prohibited at the rotation lock position and rotation of the reel with respect to the case being permitted at the rotation permission position,
wherein the reinforcing ring is formed such that a gap in the radial direction between the reinforcing ring and the rotation lock member when the rotation lock member is located at the rotation lock position becomes a predetermined value or less.
